# FASCICULE DE BREVET EUROPEEN

(11) **EP 3 096 114 B1**
(45) Date de publication et mention de la délivrance du brevet: **26.08.2020**
(21) Numéro de dépôt: 16170458.0
(22) Date de dépôt: 19.05.2016
(51) Int. Cl.: G01F 11/02

(54) **MACHINE DE DOSAGE À SIPHON À NETTOYAGE EN PLACE AMELIORÉ**
DOSIERMASCHINE MIT REINIGUNGSSIPHON AN EINEM VERBESSERTEN PLATZ
DOSING MACHINE WITH SIPHON HAVING IMPROVED CLEANING IN PLACE

(30) Priorité: 22.05.2015 FR 1554640
(43) Date de publication de la demande: 23.11.2016
(73) Titulaire: Tremark, 29000 Quimper (FR)
(72) Inventeur: MARCHADOUR, Jean-Charles, 29120 PONT L'ABBE (FR)
(74) Mandataire: Lavialle, Bruno François Stéphane

(56) Documents cités:
- EP-A1- 2 253 941
- DE-B- 1 120 724
- FR-A1- 2 661 740

## Description

### DOMAINE DE L'INVENTION

La présente invention concerne le dosage de produits tels que des produits alimentaires.

### ARRIERE PLAN DE L'INVENTION

Une machine de dosage comprend généralement un bâti sur lequel sont fixés :
- une trémie d'alimentation ;
- une unité de dosage pourvue d'une chemise de dosage qui est raccordée à une sortie de la trémie et qui reçoit à coulissement un piston ;
- des moyens d'entraînement du piston ;
- un conduit de refoulement du produit relié à la chemise de dosage ;
- une vanne à boisseau à trois voies pouvant sélectivement relier l'intérieur de la chemise de dosage avec la trémie d'alimentation ou le conduit de refoulement.

Lorsque la machine doit être nettoyée, par exemple en raison d'un changement du produit à doser, il faut démonter manuellement le conduit de distribution, l'unité de dosage et la vanne à boisseau afin de pouvoir introduire à l'intérieur de ceux-ci un produit de nettoyage. Ce démontage, et le remontage qui suit, doivent être opérés par des ouvriers qualifiés car de leur réalisation correcte dépend le bon fonctionnement de la machine.

Pour les machines comprenant plusieurs unités de dosage montées sur un plateau rotatif, il est nécessaire de procéder à la dépose individuelle de chacun des éléments des unités de dosage et de maintenir en position de manière très précise le plateau relativement aux unités de dosage afin de réduire les temps de remontage des éléments sur le plateau ainsi que le réglage dudit plateau.

Une machine nécessitant un démontage complet afin d'être nettoyée est connue par exemple du document FR-A1- 2661740.

Pour simplifier les opérations de démontage et de remontage, il est connu, notamment du document FR-A-2843798, de monter une unité de dosage sur un élément support articulé sur le bâti. Cet agencement facilite, lors du remontage, le positionnement relatif des pièces à remonter. Les opérations de démontage et remontage restent cependant des opérations essentiellement manuelles réalisées par du personnel formé à cet effet et qui requièrent une immobilisation prolongée de la machine de dosage.

### OBJET DE L'INVENTION

Un but de l'invention est de simplifier les opérations de nettoyage d'une machine de dosage et d'également réduire le temps d'immobilisation de la machine lors de son nettoyage.

### RESUME DE L'INVENTION

A cet effet, on prévoit une machine de dosage comportant un bâti sur lequel sont montées une trémie d'alimentation et une chemise de dosage montée entre une sortie de la trémie d'alimentation et un conduit de refoulement. La chemise de dosage reçoit à coulissement, selon un axe longitudinal, un piston d'aspiration et de refoulement et la machine de dosage comprend des moyens d'entraînement du piston. Selon l'invention, la chemise de dosage comprend une fenêtre radiale et est déplaçable en rotation autour de l'axe longitudinal sous l'action de moyens de commande en rotation agencés pour sélectivement positionner la chemise dans une première position dans laquelle la fenêtre radiale fait face à la sortie de la trémie d'alimentation et une deuxième position dans laquelle la fenêtre radiale fait face à une alimentation du conduit de refoulement.

Une telle machine limite le nombre de pièces et simplifie leurs liaisons respectives, car la chemise joue le rôle de la vanne à boisseau à trois voies. Ainsi, lors des opérations de nettoyage, les pièces sont moins nombreuses et plus aisées à déposer et à remonter.

Avantageusement, le piston est monté sur le bâti pour coulisser entre une première position de travail dans laquelle le piston est dans la chemise de dosage et une position de nettoyage dans laquelle le piston est dégagé de la chemise de dosage.

Ainsi, le démontage et le remontage de l'unité de dosage (ensemble chemise de dosage-piston) sont automatisés. Les opérations de démontage et de remontage sont donc simples et peuvent être réalisées par du personnel non qualifié. L'automatisation permet en outre de rendre ces opérations rapides et fiables.

Selon un mode de réalisation particulièrement avantageux, la chemise de dosage comprend une butée disposée de manière à ce que le piston vienne en contact avec celle-ci lorsqu'il passe en position de nettoyage. Ceci permet, par une unique translation du piston de provoquer un dégagement de la chemise de dosage en même temps qu'un dégagement du piston.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés parmi lesquels :
- la figure 1 est une vue en coupe longitudinale d'une machine de dosage selon l'invention dans une phase préalable au dosage ;
- la figure 2 est une vue en coupe longitudinale d'une machine de dosage selon l'invention dans une première phase de dosage ;
- la figure 3 est une vue identique à la figure 1 de la machine de dosage dans une deuxième phase de dosage;
- la figure 4 est une vue en perspective de la machine de dosage de la figure 1 ;
- la figure 5 est une vue en coupe selon le plan de coupe V-V de la machine de dosage de la figure 1 ;
- la figure 6 est une vue en coupe selon le plan de coupe VI-VI de la machine de dosage de la figure 2 ;
- la figure 7 est une vue identique à la figure 1 de la machine de dosage dans une troisième phase de dosage ;
- la figure 8 est une vue identique à la figure 1 de la machine de dosage dans une première phase de démontage ;
- la figure 9 est une vue identique à la figure 1 de la machine de dosage dans une deuxième phase de démontage ;
- la figure 10 est une vue en perspective de la machine de dosage de la figure 9 ;
- la figure 11 est une vue identique à la figure 1 de la machine de dosage dans une troisième phase de démontage.

### DESCRIPTION DETAILLEE DE L'INVENTION

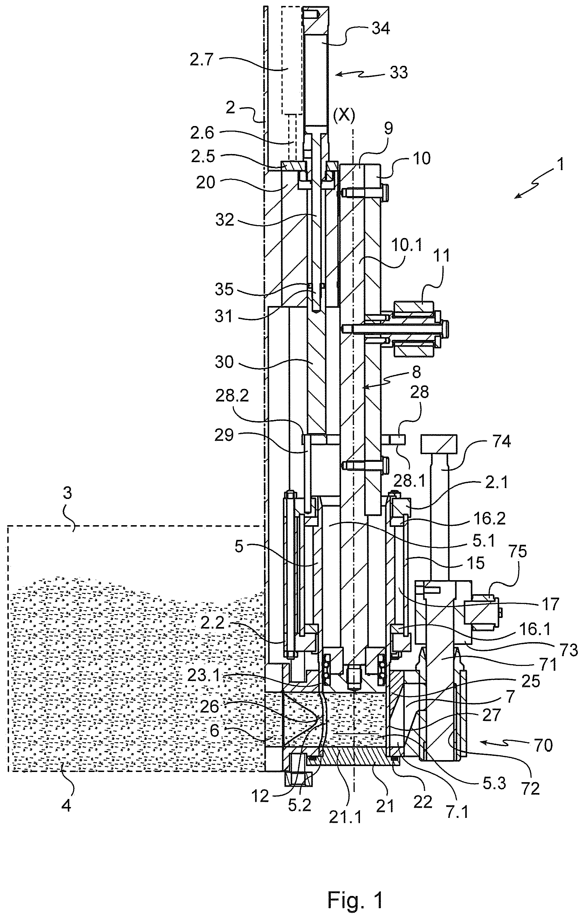

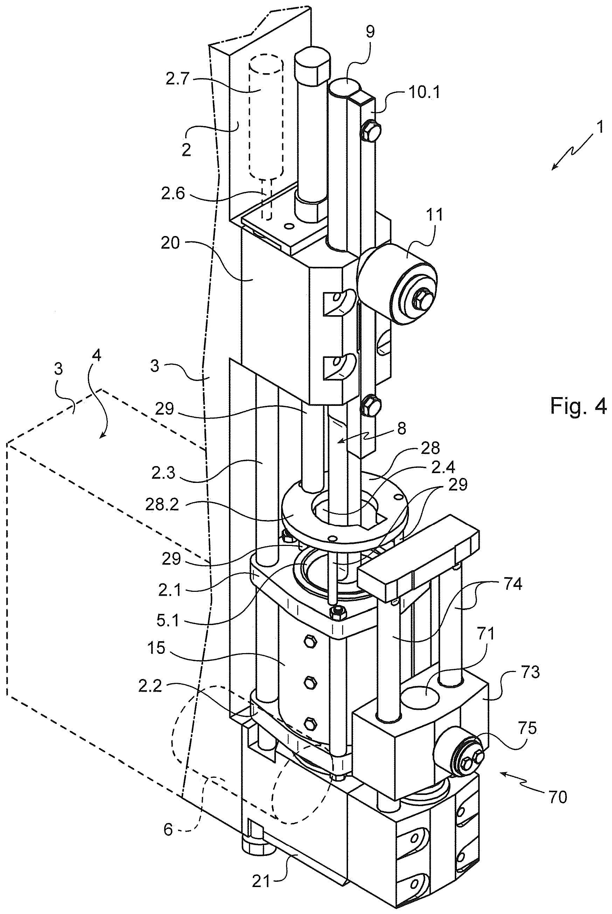

En référence aux figures 1 à 6, la machine de dosage selon l'invention, et généralement désignée 1, comporte un bâti 2 sur lequel sont montées une trémie 3 d'alimentation en produit à conditionner -ici une pâte alimentaire 4- et une chemise de dosage 5 montée entre une sortie 6 de la trémie 3 et un conduit 72 de refoulement. Un poussoir 71 coulisse dans le conduit de refoulement 72 dont l'extrémité inférieure distribue la pâte alimentaire 4 dans un récipient à remplir 50 (non représenté). Le poussoir 71 est solidaire d'un bloc 73 guidé à coulissement par deux colonnes 74 et pourvu d'un galet 75 coopérant avec une came formée d'un rail (non représenté) en mouvement relatif par rapport au galet 75. Un siphon de dosage 7 est interposé entre la chemise de dosage 5 et le conduit de refoulement 72. La chemise de dosage 5 est de forme cylindrique et s'étend selon un axe longitudinal X. La chemise de dosage 5 comprend une extrémité supérieure 5.1 ouverte au travers de laquelle s'étend un piston 8 d'aspiration et de refoulement qui est reçu à coulissement selon l'axe longitudinal X. La tige 9 du piston 8 reçoit une tige 10 de guidage vissée et en saillie de laquelle vient un galet 11 coopérant avec une came formée d'un rail (non représenté) en mouvement relatif par rapport au galet 11. Le bâti 2 comprend un support 20 dont deux parois viennent en contact avec les flancs 10.1 de la tige 10 de guidage, assurant ainsi le guidage en translation du piston 8 relativement à la chemise de dosage 5.

Une portion inférieure 5.2 de la chemise de dosage 5 est engagée à coulissement et à rotation dans un alésage 23.1 d'un boisseau cylindrique 23 d'axe X solidaire du bâti 2. La chemise de dosage 5 a une extrémité inférieure 5.3 ouverte et qui vient en butée contre un disque 21 en saillie axiale duquel vient une portion 21.1 cylindrique engagée dans l'extrémité inférieure 5.3. Le disque 21 comprend un joint 22 annulaire plat. Le disque 21 ferme la portion inférieure du boisseau cylindrique 23. La portion 21.1 assure alors un guidage en rotation de la chemise de dosage 5 autour de l'axe X.

Le disque 21 est solidaire de l'extrémité inférieure de deux colonnes parallèles 2.3 et 2.4. Ces colonnes 2.3 et 2.4 sont montées à coulissement par rapport au bâti 2 au niveau du support 20 et leurs extrémités supérieures respectives sont solidaires d'une plaque 2.5 liée à la tige 2.6 d'un vérin pneumatique 2.7. Enfin, la paroi 25 de l'alésage 23.1 du boisseau 23 comprend deux fenêtres radiales 26 et 27 disposées à 180 degrés l'une de l'autre. Les fenêtres radiales 26 et 27 débouchent respectivement sur la sortie 6 de la trémie 3 et sur une première extrémité 7.1 du siphon de dosage 7. Les fenêtres radiales 26 et 27 sont de section sensiblement rectangulaire et comprennent une base de même longueur. La hauteur h₂₆ de la fenêtre radiale 26 est, ici, supérieure à la hauteur h₂₇ de la fenêtre radiale 27.

La chemise de dosage 5 comprend une fenêtre radiale 12 elle aussi rectangulaire et de hauteur sensiblement égale à celle de la fenêtre 26 et est déplaçable en rotation autour de l'axe X. La chemise de dosage 5 peut donc sélectivement adopter une première position dans laquelle la fenêtre radiale 12 fait face à la fenêtre radiale 26 - et donc dans laquelle l'intérieur de la chemise de dosage 5 est en lien avec la sortie de la trémie 3 - et une deuxième position dans laquelle la fenêtre radiale 12 fait face à la fenêtre radiale 27 et relie alors l'intérieur de la chemise de dosage 5 et le siphon de dosage 7 qui alimente le conduit de refoulement 72.

La chemise de dosage 5 comprend également une baguette 13 de section carrée dont une première portion de sa section s'étend parallèlement à l'axe X dans une rainure 14 de la chemise de dosage 5. Une portion de tube 15 cylindrique s'étend autour de la chemise de dosage 5 et est reçue entre deux joints annulaires 16.1 et 16.2. La portion de tube 15 et les joints 16.1 et 16.2 sont maintenus dans une flasque 2.1 supérieure et une flasque 2.2 inférieure montées à coulissement sur les colonnes 2.3 et 2.4. La flasque 2.2 est également pourvue d'un joint d'étanchéité annulaire plat 23.2 qui vient en appui sur la portion supérieure du boisseau 23. Les joints 16.1 et 16.2 ainsi que la portion de tube 15 délimitent une chambre étanche 17 solidaire du bâti 2. Deux baguettes 18 et 19 de section carrée sont vissées sur la section de tube 15 et s'étendent dans la chambre 17 en formant un angle sensiblement supérieur à 180 degrés l'une de l'autre jusqu'à venir en contact étanche avec la paroi extérieure de la chemise de dosage 5. La deuxième portion de section de la baguette 13 vient en saillie de la chemise de dosage 5 et définit une paroi 36 qui délimite avec les baguettes 18 et 19 deux volumes étanches 40 et 41 dans la chambre 17. Le premier volume étanche 40 est délimité par la baguette 18, les joints 16.1 et 16.2, la face extérieure de la chemise de dosage 5, la face intérieure de la portion de cylindre 15 et la paroi 36. Le deuxième volume étanche 41 est délimité par la baguette 19, les joints 16.1 et 16.2, la face extérieure de la chemise de dosage 5, la face intérieure de la portion de cylindre 15 et la paroi 36. La portion de tube 15 reçoit, au niveau de chaque baguette 18 et 19, une buse d'injection d'air comprimé 18.1 et 19.1 commandée par un système de cames 60 non représenté. La position des baguettes 18 et 19 est telle que la baguette 13 décrit une rotation d'environ 180° lorsqu'elle passe d'une position dans laquelle elle est en butée contre la baguette 18 à une position dans laquelle elle est en butée contre la baguette 19.

La chemise de dosage 5 comprend également une butée 28 annulaire dont la surface inférieure 28.1 est reliée à la flasque 2.1 par trois pieds 29. La butée 28 comprend un perçage circulaire d'axe X et s'étend à distance de la première extrémité supérieure 5.1 de la chemise de dosage 5. Une tige 30 rapportée par vissage sur l'extrémité 31 d'un piston 32 s'étend depuis le support 20 jusqu'à la surface supérieure 28.2 de la butée 28. Un actionneur linéaire pneumatique, ici un vérin 33, comprend une chemise 34 qui vient en saillie de la face supérieure du support 20 et qui est fixée à celui-ci par vissage. L'extrémité 31 du piston 32 est filetée et reçoit un contre-écrou 35 contre lequel s'appuie la tige 30. Les positions du contre-écrou 35 et de la tige 30 permettent alors de régler l'effort appliqué par le vérin 33 sur la butée 28.

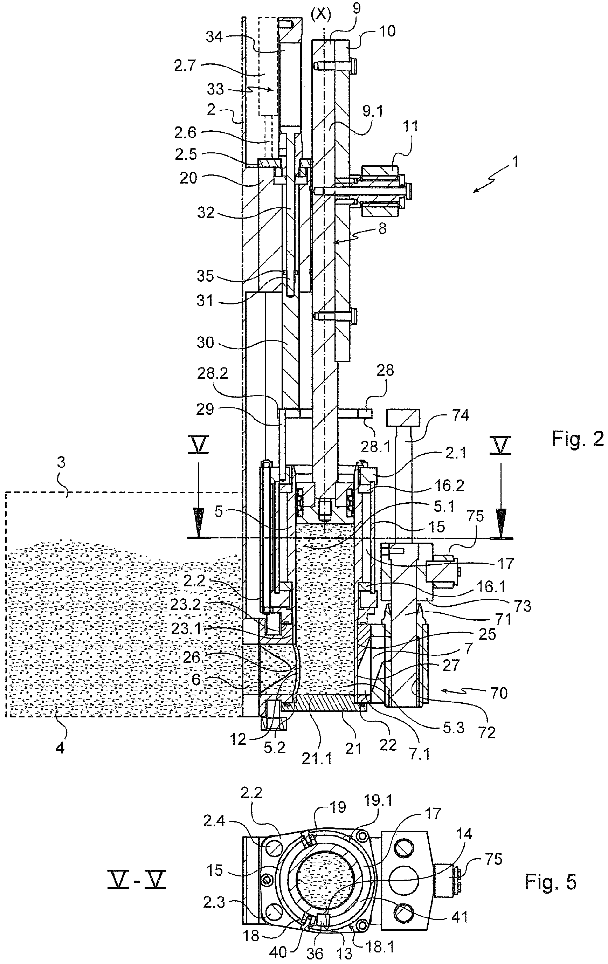

Au sens de la présente demande, et comme il est d'usage dans le domaine des machines de dosage, un piston est à son point bas lorsque le volume de la chambre qu'il définit avec le cylindre est le plus faible. De même, un piston est à son point haut lorsque le volume de la chambre qu'il définit avec le cylindre est le plus important. Ainsi, dans la représentation de la figure 1, le piston 8 est à son point bas .Dans la représentation de la figure 2, le piston 8 est à son point haut.

En fonctionnement, et selon une étape préalable au dosage, le piston 8 est amené à son point bas ce qui permet à l'air contenu dans le cylindre de s'échapper vers la trémie 3 (figure 1).

Selon une première étape de dosage, la machine de dosage 1 est dans la configuration initiale correspondant à la figure 1 dans laquelle :
- le piston 8 est à son point bas dans lequel la tête du piston 8 affleure le bord supérieur de la fenêtre radiale 12 ;
- la paroi 36 est en butée contre la baguette 18 et le premier volume étanche 40 est à son minimum tandis que le deuxième volume étanche 41 est à son maximum ;
- la chemise de dosage 5 est alors dans sa première position dans laquelle la fenêtre radiale 12 fait face à la fenêtre radiale 26 du boisseau 23, mettant ainsi en communication l'intérieur de la chemise de dosage 5 et la sortie 6 de la trémie 3 ;
- le poussoir 71 est à son point bas ;
- le piston 32 du vérin 33 est déployé et la tige 30 vient en contact avec la butée 28 pour bloquer la translation de la chemise de dosage 5 selon l'axe X (l'effort appliqué par la tige 30 permet également de mettre en compression le joint 21 entre la paroi radiale 5.3 et le fond 22 du boisseau 23).

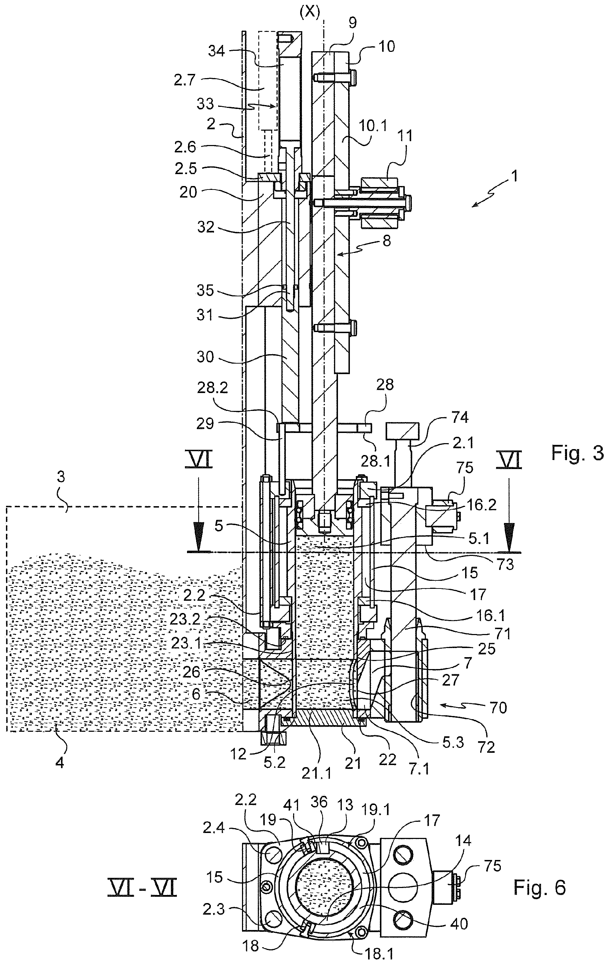

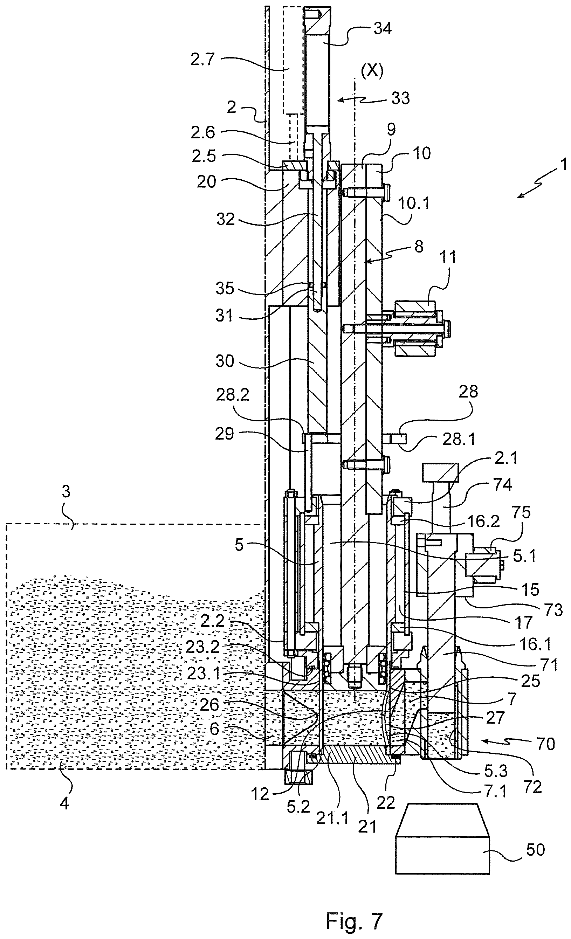

Dans cette position, le piston 8 a aspiré un volume de dosage de pâte alimentaire 4 correspondant au produit de la course du piston 8 et du diamètre interne de la chemise de dosage 5 (figure 2). Au cours de la deuxième étape de dosage, le système de cames 60 commande l'alimentation en air de la buse d'injection d'air comprimé 18.1 qui introduit alors de l'air comprimé dans le premier volume étanche 40. Ceci provoque une rotation de la chemise de dosage 5 depuis sa première position jusqu'à sa deuxième position, représentée en figure 3. Dans cette position, la paroi 36 est en butée contre la baguette 19 et le deuxième volume étanche 41 est à son minimum tandis que le premier volume étanche 40 est à son maximum. Selon une troisième étape de dosage, le rail de guidage de la came à galet 75 commande le coulissement du poussoir 71 jusqu'à son point haut. Une fois le poussoir 71 à son point haut, le rail de guidage de la came à galet 11 commande le coulissement du piston 8 jusqu'à son point bas. Au cours de ce mouvement, la pâte alimentaire 4 contenue dans la chemise de dosage 5 est transférée de l'intérieur de la chemise de dosage 5 jusqu'au conduit de refoulement 72 via le siphon de dosage 7. Peu avant que le piston 8 atteigne son point bas, le poussoir 71 coulisse de manière à obstruer la fenêtre 7.2. Ainsi la pâte alimentaire 4 présente dans le siphon 7 demeure sous pression et le poussoir 71 assure un isolement étanche du siphon 7 et du conduit de refoulement 72. Ceci permet d'éviter que le produit situé dans le volume supérieur du siphon 7 puisse s'écouler dans le conduit de refoulement 72 par gravité et fausser le dosage. Ceci est particulièrement vrai pour les produits comprenant une importante phase liquide tels que des confitures. Cette situation est représentée en figure 7. Selon une quatrième étape de dosage, le rail de guidage coopérant avec le galet 75 commande le passage du poussoir 71 à son point bas, ce qui provoque le transfert du volume de pâte alimentaire 4 depuis le conduit de refoulement 72 jusqu'à l'intérieur du récipient à remplir 50. Selon une cinquième étape de dosage, le système de cames 60 commande l'alimentation en air de la buse d'injection d'air comprimé 19.1 qui introduit alors de l'air comprimé dans le deuxième volume étanche 41. Ceci provoque alors une rotation de la chemise de dosage 5 depuis sa deuxième position jusqu'à sa première position et le cycle de dosage peut reprendre à partir de la première étape.

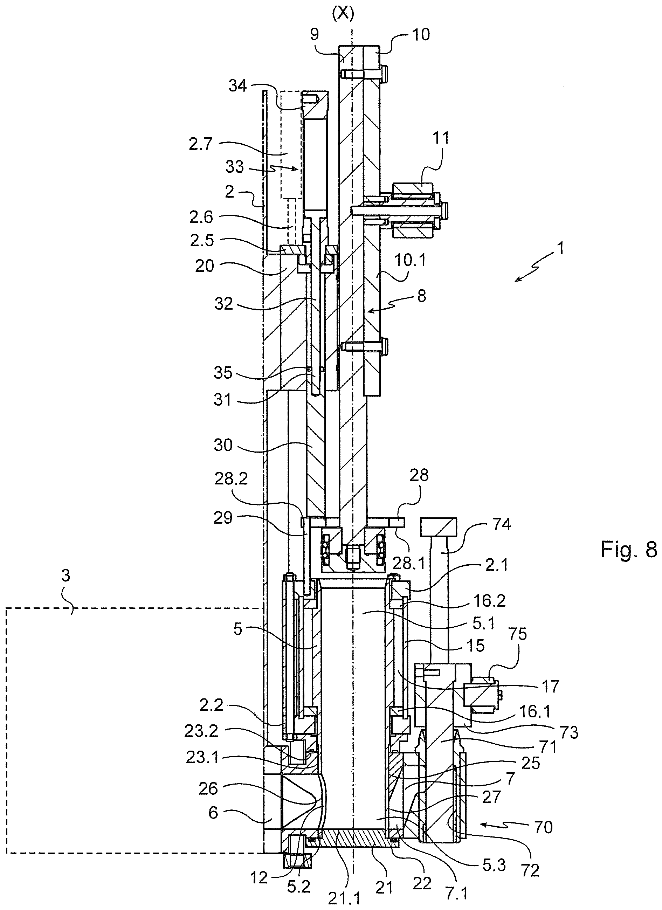

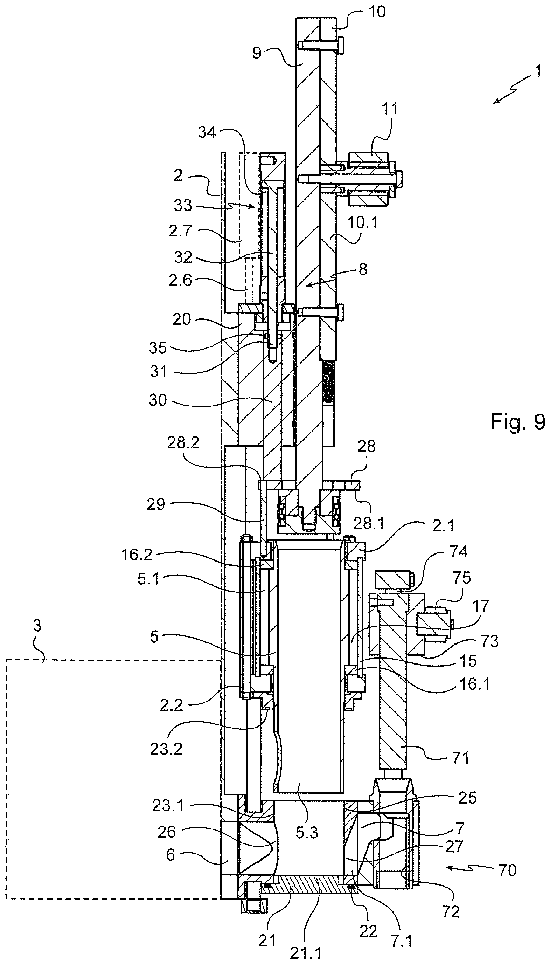

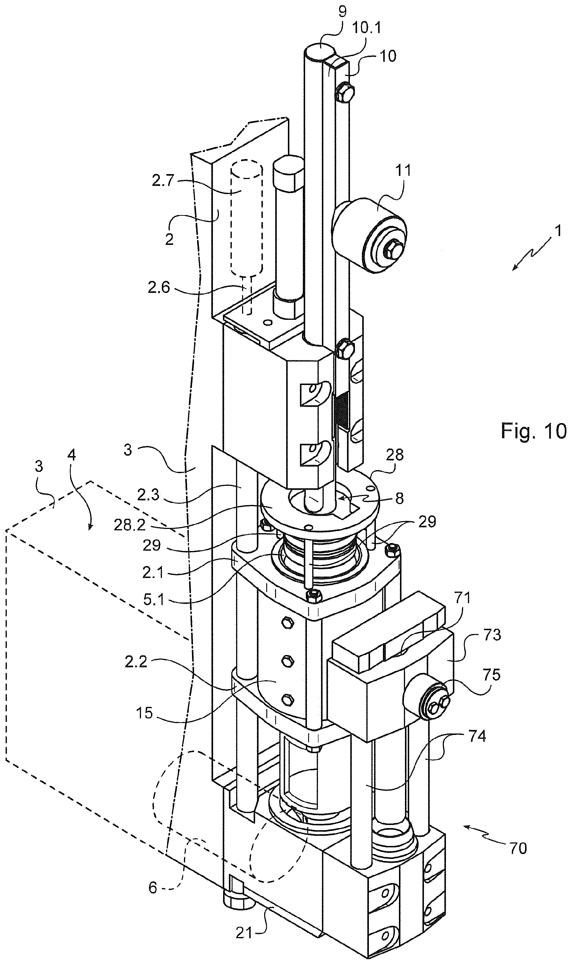

Lorsqu'il est nécessaire de procéder à un nettoyage de la machine de dosage 1, par exemple lors d'un changement du produit à doser, les opérations sont les suivantes. Selon une première étape de démontage, on commande le retrait de la tige 34 du vérin 32. Selon une deuxième étape de démontage, le rail de guidage commande à la came à galet 11 le coulissement du piston 8 selon l'axe X depuis sa position de travail dans laquelle il est dans la chemise de dosage 5 jusqu'à une position de nettoyage dans laquelle le piston 8 est dégagé de la chemise de dosage 5. Au cours de son coulissement, la tête du piston 8 vient en contact avec la face inférieure 28.1 de la butée 28. Cette situation est représentée en figure 8. Selon une deuxième étape de démontage représentée en figure 9, le rail de guidage commande à la came à galet 11 le coulissement du piston 8 selon l'axe X. Au cours de ce mouvement, le piston 8 entraîne alors la chemise de dosage 5 qui coulisse hors du boisseau 23 et se trouve alors dégagée de celui-ci dans une position de nettoyage. La fenêtre radiale 12 est donc dégagée de la sortie 6 de la trémie 3 et du siphon de dosage 7. Cette situation est représentée en figure 9 et 10.

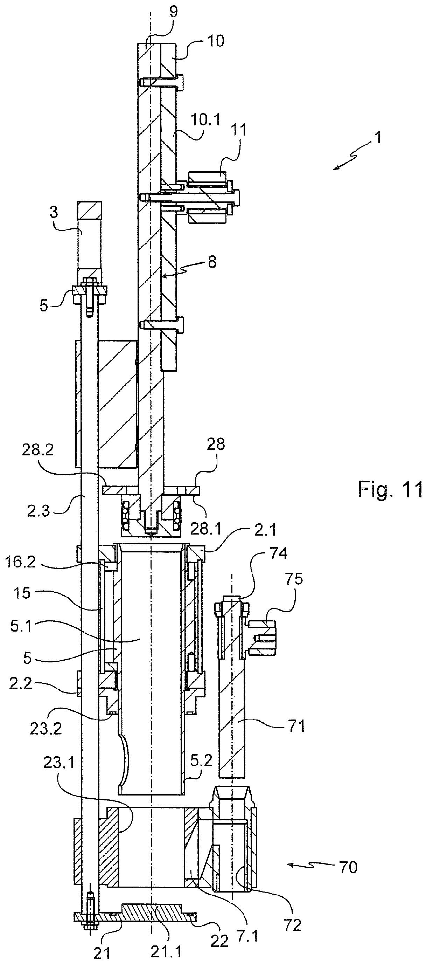

Selon une troisième étape de démontage, on commande le déploiement de la tige 2.6 du vérin 2.7, ce qui entraîne la translation des colonnes 2.3 et 2.4 et provoque l'éloignement du disque 21 relativement à la portion inférieure du boisseau 23. Cette situation est représentée en figure 11.

Il est alors possible de procéder aisément à un nettoyage par rinçage de l'ensemble de l'installation dans la mesure où tous les volumes recevant le produit à doser (ici la pâte alimentaire 4) sont accessibles. On pourra par exemple verser un liquide de nettoyage par l'extrémité supérieure 5.1 de la chemise de dosage 5 qui sera évacué par l'extrémité inférieure 5.3. Il pourra être procédé similairement pour le nettoyage du boisseau 23 par introduction d'un liquide de nettoyage dans la trémie 3 ou par son extrémité supérieure. Comme visible sur les figures 9, 10 et 11, la came commandant le galet 75 peut simultanément commander la translation du poussoir 71 selon un axe parallèle à l'axe X de manière à dégager le poussoir 71 du conduit de refoulement 72 et permettre le nettoyage du siphon de dosage 7. Toutes les pièces de la machine de dosage 1 en contact avec le produit à doser sont aisément accessibles et peuvent même être brossées.

Une fois les opérations de nettoyage achevées, les cames commandent respectivement, via les galets 11 et 75, le coulissement du piston 8 et du poussoir 71 vers leurs points bas respectifs. Au cours de ce mouvement, la chemise de dosage 5 vient s'engager dans le boisseau 23 jusqu'à ce que le joint 23.2 de la flasque 2.2 vienne en appui sur la portion supérieure du boisseau 23. Le piston 8 poursuit ensuite son coulissement et vient s'engager dans la chemise de dosage 5 jusqu'à la position représentée en figure 2. Au cours de ce mouvement, le poussoir 71 vient s'engager dans le conduit de refoulement 72. Une fois le piston 8 et le poussoir 71 en place, on commande la sortie du piston 32 du vérin 33 de manière à ce que la tige 30 vienne en contact avec la face supérieure 28.2 de la butée 28. La position du contre-écrou 35 sur le piston 32 est réglée de manière à ce que l'effort appliqué soit suffisant pour bloquer la chemise de dosage 5 en translation. Enfin, on commande le retrait de la tige 2.6 du vérin 2.7 de manière à ramener le disque 21 et son joint 22 en contact avec la portion inférieure du boisseau 23. La pression d'alimentation du vérin 2.7 permet de contrôler l'effort de compression du joint 22.

Selon un mode de réalisation préféré non représenté, les moyens de commande en rotation de la chemise de dosage comprennent un secteur denté, ici couvrant une amplitude angulaire de 100°, solidaire de la chemise de dosage. les moyens de commande en rotation de la chemise de dosage comprennent également un actionneur rotatif, ici un vérin rotatif pneumatique, portant un pignon coopérant avec le secteur denté. Les fenêtres radiales du boisseau sont disposées à 100 degrés l'une de l'autre et une rotation du vérin rotatif pneumatique permet de positionner la fenêtre du piston face à l'une ou l'autre des fenêtres du boisseau.

Bien entendu, l'invention n'est pas limitée au mode de réalisation décrit mais englobe toute variante entrant dans le champ de l'invention telle que définie par les revendications.

En particulier,
- bien qu'ici un siphon de dosage soit interposé entre la chemise de dosage et le conduit de refoulement, l'invention s'applique également à une machine de dosage dépourvue de siphon de dosage et dans laquelle la fenêtre radiale de la chemise de dosage fait directement face au conduit de refoulement.
- bien qu'ici le produit à conditionner soit une pâte alimentaire, l'invention s'applique également à d'autres types de produits comme par exemple des produits liquides, visqueux, composites liquides/solides, alimentaires ou non ;
- bien qu'ici la machine de dosage ait été décrite en référence à une unique unité de dosage, l'invention s'applique également à une machine de dosage comprenant une pluralité d'unités de dosage montées, par exemple, sur un plateau rotatif en mouvement par rapport à une came formée d'un rail fixe coopérant avec les galets ;
- bien qu'ici les mouvements du piston pour son dégagement hors de la chemise de dosage et pour le dégagement de la chemise de dosage hors du boisseau soient commandés par des galets engagés dans des rails de guidage, l'invention s'applique également à d'autres types de moyens motorisés comme par exemple des actionneurs pneumatiques, hydrauliques ou électriques, linéaires ou rotatifs ;
- bien qu'ici les fenêtres radiales du boisseau soient disposées à 180 degrés l'une de l'autre, l'invention s'applique également à d'autres types de répartition de ces fenêtres comme par exemple des fenêtres adjacentes ou séparées d'un angle supérieur ou inférieur à 120 degrés. Il en va de même pour les baguettes 18 et 19 ;
- bien qu'ici la fenêtre radiale du boisseau débouchant sur la sortie de la trémie d'alimentation soit d'un diamètre supérieur à celle débouchant sur le siphon de dosage, l'invention s'applique également à des fenêtres radiales de diamètres identiques ou dont le rapport entre les diamètres est différent ;
- bien qu'ici les moyens de commande en rotation de la chemise de dosage comprennent une portion de tube définissant une chambre s'étendant autour de la chemise de dosage, l'invention s'applique également à une chambre s'étendant partiellement autour de la chemise ;
- bien qu'ici une paroi délimite deux volumes étanches dans la chambre s'étendant autour de la chemise de dosage, l'invention s'applique également à une chambre dans laquelle est délimité un unique volume étanche, éventuellement pourvu de moyens de rappel en position ;
- bien qu'ici les moyens de commande en rotation de la chemise de dosage comprennent une chambre divisée en deux volumes étanches, l'invention s'applique également à d'autres types de moyens de commande en rotation de la chemise de dosage, comme par exemple une couronne dentée en lien avec un moteur, un actionneur linéaire tangent à la chemise, des masses électromagnétiques agissant sur un téton ferromagnétiques solidaire de la chemise de dosage ou encore une ou plusieurs bobines ;
- bien qu'ici les injections d'air dans les buses soient commandées par un système de cames, l'invention s'applique également à d'autres types de commande comme par exemple une unité de traitement logique ou un micro-contrôleur pilotant des électrovannes ;
- bien qu'ici le fluide de commande des vérins et des volumes étanches soit de l'air comprimé, l'invention s'applique également à d'autres types de commande comme par exemple des commandes hydrauliques ou électriques ;
- bien qu'ici la butée soit de forme annulaire, l'invention s'applique également à toutes formes de butées ainsi qu'à d'autres types d'actionneurs de blocage de la translation de la chemise de dosage comme par exemple des moyens de pincement de la chemise, un ou plusieurs doigts engagés dans une rainure ou un perçage de la chemise de dosage ;
- bien qu'ici le vérin de blocage en translation de la chemise de dosage comprenne un contre-écrou vissé sur l'extrémité de son piston et qui permet d'ajuster l'effort de blocage exercé sur la chemise de dosage, l'invention s'applique également à d'autres moyens de régler l'effort de blocage de la translation de la chemise de dosage comme par exemple un distributeur proportionnel ou une extrémité pourvue de moyens élastiques compressibles ;
- bien qu'ici, afin d'en faciliter la description, les étapes des opérations de dosage et de démontage-remontage aient été décrites comme successives, l'invention s'applique également à un déroulement simultané de certaines étapes ;
- bien qu'ici les opérations de démontage aient été décrites à partir d'une position de la chemise de dosage dans laquelle la fenêtre radiale de la chemise de dosage fait face à la sortie de la trémie d'alimentation, l'invention s'applique à des opérations de nettoyage menées avec un positionnement quelconque de la chemise de dosage relativement au boisseau.

## Revendications

1. Machine de dosage (1) comportant un bâti (2) sur lequel sont montées une trémie d'alimentation (3) et une chemise de dosage (5) cylindrique montée entre une sortie (6) de la trémie d'alimentation (3) et un conduit de refoulement (72), la chemise de dosage (5) comprend une première extrémité ouverte au travers de laquelle s'étend un piston (8) d'aspiration et de refoulement reçu à coulissement selon un axe longitudinal (X), la machine de dosage (1) comprenant des moyens d'entraînement (11) du piston (8) et la chemise de dosage (5) comprenant une fenêtre radiale (12) et étant déplaçable en rotation autour de l'axe longitudinal (X) sous l'action de moyens de commande en rotation (40, 41) agencés pour sélectivement positionner la chemise de dosage (5) dans une première position dans laquelle la fenêtre radiale (12) fait face à la sortie (6) de la trémie d'alimentation (3) et une deuxième position dans laquelle la fenêtre radiale (12) fait face à une alimentation du conduit de refoulement (72) et étant **caractérisée en ce que** la chemise de dosage comprenant une deuxième extrémité ouverte venant en butée contre un premier élément monté à coulissement par rapport au bâti.

2. Machine (1) selon la revendication 1, dans laquelle le piston (8) est monté sur le bâti (2) pour coulisser entre une première position de travail dans laquelle le piston (8) est dans la chemise de dosage (5) et une position de nettoyage dans laquelle le piston (8) est dégagé de la chemise de dosage (5).

3. Machine (1) selon la revendication 2, dans laquelle la chemise de dosage (5) comprend une butée (28) disposée de manière à ce que le piston (8) vienne en contact avec celle-ci lorsqu'il passe en position de nettoyage.

4. Machine (1) selon la revendication 1, dans laquelle la chemise de dosage (5) est montée à coulissement sur le bâti (2) pour être déplacée entre une position axiale de travail dans laquelle la fenêtre radiale (12) est déplaçable par pivotement entre ses première et deuxième positions et une position axiale de nettoyage dans laquelle la fenêtre radiale (12) est dégagée de la sortie (6) de la trémie d'alimentation (3) et du conduit de refoulement (7).

5. Machine (1) selon la revendication 1, dans laquelle une extrémité inférieure de la chemise de dosage (5) est engagée à rotation dans un boisseau (23) comprenant un premier orifice (26) relié à la sortie (6) de la trémie d'alimentation (3) et un deuxième orifice (27) relié au conduit de refoulement (7).

6. Machine (1) selon les revendications 2 et 5, dans laquelle la machine (1) comprend des moyens motorisés (11) de dégagement du piston (8) hors de la chemise de dosage (5) et de la chemise de dosage (5) hors du boisseau (23).

7. Machine (1) selon la revendication 1, dans laquelle les moyens de commande en rotation de la chemise de dosage (5) comprennent une paroi (36) venant en saillie de la chemise de dosage (5) et qui délimite au moins un volume étanche (40, 41) dans une chambre (17) solidaire du bâti (2), la chambre (17) s'étendant au moins partiellement autour de la chemise de dosage (5) et comprenant en au moins une de ses extrémités une alimentation de fluide (18.1, 19.1) de manière à ce que l'introduction de fluide dans le volume étanche (40, 41) provoque une rotation de la chemise de dosage (5) depuis la première position de la chemise de dosage (5) jusqu'à la deuxième position de la chemise de dosage(5) .

8. Machine (1) selon la revendication 7, dans laquelle la paroi (36) délimite deux volumes étanches (40, 41) disposant chacun d'une alimentation (18.1, 18.2) en fluide.

9. Machine (1) selon la revendication 1, comprenant un actionneur (32) solidaire du bâti (2) pour sélectivement bloquer une translation de la chemise de dosage (5) selon son axe longitudinal (X).

10. Machine (1) selon la revendication 9, dans laquelle l'actionneur est un vérin (32) dont la tige (32) comprend des moyens (37) de régler un effort de blocage de la translation de la chemise de dosage selon son axe longitudinal.

11. Machine selon la revendication 1, dans laquelle les moyens d'entraînement (11) du piston (8) d'aspiration et de refoulement comprennent une came (11) à galet engagée dans un rail de guidage.

12. Machine (1) selon la revendication 1, dans laquelle un siphon de dosage (7) est interposé entre la chemise de dosage (5) et le conduit de refoulement (72).

## Patentansprüche

1. Dosiermaschine (1), umfassend ein Gestell (2), an dem ein Fülltrichter (3) und eine zylindrische Dosierhülse (5) montiert sind, die zwischen einem Auslass (6) des Fülltrichters (3) und einer Förderleitung (72) montiert ist, wobei die Dosierhülse (5) ein erstes offenes Ende umfasst, durch das sich ein Saug- und Förderkolben (8) erstreckt, der entlang einer Längsachse (X) verschiebbar aufgenommen ist, wobei die Dosiermaschine (1) Antriebsmittel (11) zum Antrieb des Kolbens (8) umfasst und die Dosierhülse (5) ein radiales Fenster (12) umfasst und in Drehung um die Längsachse (X) unter der Wirkung von Drehsteuermitteln (40, 41) beweglich ist, die ausgebildet sind, um die Dosierhülse (5) selektiv in einer ersten Position zu positionieren, in der das radiale Fenster (12) dem Auslass (6) des Fülltrichters (3) gegenüberliegt, sowie in einer zweiten Position, in der das radiale Fenster (12) einer Zuführung der Förderleitung (72) gegenüberliegt, und **dadurch gekennzeichnet ist, dass** die Dosierhülse ein zweites offenes Ende umfasst, das an einem ersten Element zur Anlage kommt, das in Bezug auf das Gestell verschiebbar gelagert ist.

2. Maschine (1) nach Anspruch 1, bei der der Kolben (8) an dem Gestell (2) verschiebbar zwischen einer ersten Arbeitsposition, in der der Kolben (8) in der Dosierhülse (5) ist, und einer Reinigungsposition gelagert ist, in der der Kolben (8) aus der Dosierhülse (5) herausgezogen ist.

3. Maschine (1) nach Anspruch 2, bei der die Dosierhülse (5) einen Anschlag (28) umfasst, der derart angeordnet ist, dass der Kolben (8) mit diesem in Kontakt kommt, wenn er in die Reinigungsposition übergeht.

4. Maschine (1) nach Anspruch 1, bei der die Dosierhülse (5) verschiebbar an dem Gestell (2) gelagert ist, um zwischen einer axialen Arbeitsposition, in der das radiale Fenster (12) zwischen seiner ersten und seiner zweiten Position schwenkbar ist, und einer axialen Reinigungsposition verschoben zu werden, in der das radiale Fenster (12) von dem Auslass (6) des Fülltrichters (3) und der Förderleitung (7) entfernt ist.

5. Maschine (1) nach Anspruch 1, bei der ein unteres Ende der Dosierhülse (5) drehbar in einem Stopfen (23) eingefügt ist, der eine erste Öffnung (26) umfasst, die mit dem Auslass (6) des Fülltrichters (3) verbunden ist, sowie eine zweite Öffnung (27), die mit der Förderleitung (7) verbunden ist.

6. Maschine (1) nach den Ansprüchen 2 und 5, bei der die Maschine (1) motorisierte Mittel (11) zum Herausziehen des Kolbens (8) aus der Dosierhülse (5) sowie der Dosierhülse (5) aus dem Stopfen (23) umfasst.

7. Maschine (1) nach Anspruch 1, bei der die Drehsteuermittel zur Drehsteuerung der Dosierhülse (5) eine Wand (36) umfassen, die von der Dosierhülse (5) vorsteht und die mindestens ein dichtes Volumen (40, 41) in einer Kammer (17) begrenzt, die fest mit dem Gestell (2) verbunden ist, wobei sich die Kammer (17) zumindest teilweise um die Dosierhülse (5) herum erstreckt und in mindestens einem ihrer Enden eine Fluidzuführung (18.1, 19.1) umfasst, derart, dass das Einführen von Fluid in das dichte Volumen (40, 41) eine Drehung der Dosierhülse (5) von der ersten Position der Dosierhülse (5) bis zur zweiten Position der Dosierhülse (5) bewirkt.

8. Maschine (1) nach Anspruch 7, bei der die Wand (36) zwei dichte Volumen (40, 41) begrenzt, die jeweils über eine Fluidzuführung (18.1, 18.2) verfügen.

9. Maschine (1) nach Anspruch 1, umfassend einen Aktor (32), der fest mit dem Gestell (2) verbunden ist, um eine Translationsbewegung der Dosierhülse (5) entlang ihrer Längsachse (X) selektiv zu blockieren.

10. Maschine (1) nach Anspruch 9, bei der der Aktor ein Zylinder (32) ist, dessen Stange (32) Mittel (37) zum Einstellen einer Blockierkraft zum Blockieren der Translationsbewegung der Dosierhülse entlang ihrer Längsachse umfasst.

11. Maschine nach Anspruch 1, bei der die Antriebsmittel (11) für den Förder- und Saugkolben (8) einen Nocken (11) mit Rolle umfassen, die in eine Führungsschiene eingefügt ist.

12. Maschine (1) nach Anspruch 1, bei der ein Dosiersiphon (7) zwischen der Dosierhülse (5) und der Förderleitung (72) angeordnet ist.

## Claims

1. Metering machine (1) including a frame (2) on which are mounted a feed hopper (3) and a cylindrical metering sleeve (5) mounted between an outlet (6) of the feed hopper (3) and a discharge pipe (72), the metering sleeve (5) comprises a first opened end that slidably receives along a longitudinal axis (X) a suction and discharge piston (8), the metering machine (1) including means (11) for driving the suction and discharge piston (8) and the metering sleeve (5) including a radial window (12) and being rotatable about the longitudinal axis (X) by rotation drive means (40, 41) arranged to position the metering sleeve (5) selectively in a first position in which the radial window (12) faces the outlet (6) of the feed hopper (3) and a second position in which the radial window (12) faces a feed end of the discharge pipe (72),
being **characterized in that** the metering sleeve comprises a second opened end that comes into abutment against a first element that is slidably mounted relative to the frame.

2. Machine (1) according to Claim 1, wherein the suction and discharge piston (8) is mounted on the frame (2) to slide between a working first position in which the suction and discharge piston (8) is in the metering sleeve (5) and a cleaning position in which the suction and discharge piston (8) is disengaged from the metering sleeve (5) .

3. Machine (1) according to Claim 2, wherein the metering sleeve (5) includes an abutment (28) disposed so that the suction and discharge piston (8) comes into contact therewith when it goes to the cleaning position.

4. Machine (1) according to Claim 1, wherein the metering sleeve (5) is slidably mounted on the frame (2) to move between a working axial position in which the radial window (12) can be pivoted between its first and second positions and a cleaning axial position in which the radial window (12) is disengaged from the outlet (6) of the feed hopper (3) and the discharge pipe (72).

5. Machine (1) according to Claim 1, wherein a lower end of the metering sleeve (5) is rotatably engaged in a plug (23) including a first orifice (26) connected to the outlet (6) of the feed hopper (3) and a second orifice (27) connected to the discharge pipe (72).

6. Machine (1) according to Claims 2 and 5, wherein the machine (1) includes motorized means (11) for disengaging the suction and discharge piston (8) from the metering sleeve (5) and the metering sleeve (5) from the plug (23).

7. Machine (1) according to Claim 1, in which the means for driving rotation of the metering sleeve (5) include a wall (36) projecting from the metering sleeve (5) that delimits at least one sealed volume (40, 41) in a chamber (17) fastened to the frame (2), the chamber (17) extending at least partly around the metering sleeve (5) and having at one or both of its ends a fluid feed end (18.1, 19.1) so that introduction of fluid into the sealed volume (40, 41) causes the metering sleeve (5) to rotate from the first position of the metering sleeve (5) to the second position of the metering sleeve (5).

8. Machine (1) according to Claim 7, wherein the wall (36) delimits two sealed volumes (40, 41) each having a fluid feed end (18.1, 18.2).

9. Machine (1) according to Claim 1, including an actuator (32) fastened to the frame (2) selectively to block movement in translation of the metering sleeve (5) along its longitudinal axis (X).

10. Machine (1) according to Claim 9, wherein the actuator is a cylinder (32) the piston rod (32) of which includes means (37) for adjusting a force blocking movement in translation of the metering sleeve along its longitudinal axis.

11. Machine according to Claim 1, wherein the means (11) for driving the suction and discharge piston (8) include a roller cam (11) engaged in a guide rail.

12. Machine (1) according to Claim 1, wherein a metering siphon (7) is disposed between the metering sleeve (5) and the discharge
